# EUROPÄISCHE PATENTSCHRIFT

(11) **EP 1 020 309 B1**
(45) Veröffentlichungstag und Bekanntmachung des Hinweises auf die Patenterteilung: **04.06.2003**
(21) Anmeldenummer: 99100634.7
(22) Anmeldetag: 14.01.1999
(51) Int. Cl.: B60H 3/00, B60H 1/00, B60H 1/22

(54) **Verfahren zum Betrieb einer fahrbetriebsunabhängigen Heiz- und/oder Klimaeinrichtung und Vorrichtung zur Durchführung des Verfahrens**
Method of operating a heater and/or air conditioning device being independent from driving status and apparatus for this method
Procédé de mise en oeuvre d'une installation de chauffage et/ou climatisation indépendant de la situation de mouvement et appareil pour lebit procédé

(43) Veröffentlichungstag der Anmeldung: 19.07.2000
(73) Patentinhaber: Bayerische Motoren Werke Aktiengesellschaft, 80788 München (DE)
(72) Erfinder: Voss, Werner, 80807 München (DE); Schicktanz, Norbert, 80995 München (DE)

(56) Entgegenhaltungen:
- EP-A- 0 780 252
- DE-A- 4 014 499
- DE-A- 4 014 501
- DE-A- 19 709 053
- DE-C- 4 227 658
- DE-C- 19 720 293

## Beschreibung

Die Erfindung bezieht sich gemäß Oberbegriff des Anspruchs 1 auf ein Verfahren zum Betrieb einer fahrbetriebsunabhängigen Heiz- und/oder Klimaeinrichtung und einer Vorrichtung zur Durchführung des Verfahrens, wie es z.B. aus der DE -A- 40 14 499 bekannt ist.

Fahrbetriebsunabhängige Heiz- und/oder Klimaeinrichtungen, sog. Standheizungen bzw. Standklimatisierungen gewinnen zunehmend an Bedeutung. Sie dienen der Komfortverbesserung und ermöglichen es dem Fahrer, auch nach längeren Standzeiten das Fahrzeug mit einer angenehmen Innenraumtemperatur in Betrieb zu nehmen. Aufgrund der Vergiftungs- bzw. Brandgefahr dürfen derartige Einrichtungen jedoch nicht in geschlossenen Räumen, z. B. Garagen betrieben werden. Dieses Verbot läßt sich in aller Regel dann problemlos einhalten, wenn die Einrichtung manuell eingeschaltet wird. Es gibt aber auch die Möglichkeit, diese Einrichtung per Fernbedienung, beispielsweise durch ein Funksignal oder aber auch durch einen telefonisch aufgegebenen Befehl in Betrieb zu nehmen. Dabei kann es insbesondere zu einem versehentlichen Einschalten der Einrichtung oder aber auch zu einem Einschalten kommen, wenn der Bediener irrtümlich glaubt, das Fahrzeug stehe außerhalb eines geschlossenen Raumes.

Es ist Aufgabe der Erfindung, die aus einem Betrieb der fahrbetriebsunabhängigen Heiz- und/oder Klimaeinrichtung in geschlossenen Räumen resultierende Gefahr weitgehend auszuschließen.

Die Erfindung löst diese Aufgabe durch die Merkmale des Patentanspruchs 1.

Bei einem Betrieb der Einrichtung in einem geschlossenen Raum kommt es innerhalb kurzer Zeit zu einer deutlichen Erhöhung der Schadstoffkonzentration. Diese Erhöhung kann sowohl ein Gradient als auch eine betragsmäßige Veränderung der Schadstoffkonzentration darstellen. Unter Schadstoffkonzentration ist dabei nicht nur eine Änderung der Konzentration von schädlichen Gasen, sondern auch die Abnahme des Sauerstoffgehalts zu verstehen. Kommt es während des Betriebs der Einrichtung zu einer feststellbaren Zunahme der Schadstoffkonzentration, wird die Einrichtung abgeschaltet und damit jede Gefahr beseitigt. Dies ist beispielsweise auch dann von besonderer Bedeutung, wenn die Einrichtung im Beisein des Fahrzeugbenutzers in geschlossenen Räumen betrieben wird und er die aus der Abnahme des Sauerstoffgehalts sich für ihn ergebende Gefahr nicht erkennt. Von besonderer Bedeutung ist das Verfahren dann, wenn es sich bei der Einrichtung um eine fernbedienbare Heiz- und/oder Klimaeinrichtung handelt. Bei einer derartigen Einrichtung besteht besonders die Gefahr einer Fehlauslösung, die zudem häufig für den Bediener nicht erkennbar ist bzw. von ihm nicht erkannt wird. Auch hier wird durch die Erfindung jede Brand- oder Vergiftungsgefahr ausgeschlossen.

Ein weiterer Aspekt der Erfindung beschäftigt sich damit, den erforderlichen Aufwand möglichst gering zu halten. Diesem Ziel dient die im Patentanspruch 3 angegebene Maßnahme. Dabei wird der i. d. R. ohnehin vorhandene Schadstoffsensor, der bei der fahrbetriebsabhängigen Heiz- und/oder Klimaeinrichtung den Frischluft/Umluftbetrieb steuert, auch als Schadstoffsensor im Rahmen der Erfindung verwendet. Die Steuerung des Frischluft-/Umluftbetriebs ist an sich seit langem bekannt. Aus einer Vielzahl von Druckschriften ist beispielsweise die DE 33 04 324 C zu nennen. Der Schadstoffsensor erhält damit eine Doppelfunktion. Während des Fahrbetriebs des Fahrzeugs dient er dazu, eine durch eine hohe Schadstoffkonzentration der Umgebungsluft verursachte Verschlechterung der Luftqualität im Innenraum zu verhindern, während er bei Stand des Fahrzeugs mit in der Regel nicht anwesendem Fahrer dazu dient, den Betrieb der Einrichtung in geschlossenen Räumen weitgehend zu verhindern.

Auf diese Weise wird durch die Erfindung eine deutliche Funktionsverbesserung und ein Mißbrauchsschutz erzielt. Durch die Doppelverwendung des ohnehin vorhandenen Sensors wird die Realisierung der Erfindung ohne zusätzlichen apparativen Aufwand möglich. Die Erfindung läßt sich durch eine geringfügige Änderung der i. d. R. ohnehin vorhandenen Programmsteuerungen zum Betrieb der motorunabhängigen und der motorabhängigen Heiz- und/oder Klimaeinrichtung realisieren.

## Patentansprüche

1. Verfahren zum Betrieb einer fahrbetriebsunabhängigen Heiz-und/oder Klimaeinrichtung von Fahrzeugen, **dadurch gekennzeichnet, daß** während des Betriebs der Einrichtung ein Schadstoffsensor für die dem Fahrzeug-Innenraum zugeführte Frischluft aktiviert ist und daß die Einrichtung abgeschaltet wird, wenn der Sensor eine Zunahme der Schadstoffkonzentration feststellt.

2. Verfahren nach Anspruch 1, **gekennzeichnet durch** Anwendung bei einer über ein Fernbedienungssignal aktivierbaren Standheizung und/oder Standklimaeinrichtung.

3. Vorrichtung zur Durchführung des Verfahrens nach Anspruch 1 oder 2, **dadurch gekennzeichnet, daß** der Schadstoffsensor auch den Frischluft-/Umluftbetrieb der motorabhängigen Heiz- und/oder Klimaeinrichtung steuert.

## Claims

1. A method of operating a device, independently of driving conditions, for heating and/or air-conditioning a vehicle, **characterised in that** during operation of the device, a sensor is activated for pollutants in the fresh air entering the interior of the vehicle and the device is switched off if the sensor detects an increase in the concentration of pollutants.

2. A method according to claim 1, **characterised by** use of an auxiliary heater and/or air-conditioner activated by a remote-control signal.

3. A device for working the method according to claim 1 or 2, **characterised in that** the pollutant sensor also controls the circulation of air or fresh air by the heating and/or air-conditioning device depending on the engine.

## Revendications

1. Procédé pour faire fonctionner une installation de chauffage et/ou de climatisation indépendante de l'état de conduite dans des véhicules,
**caractérisé en ce qu'**
un détecteur de substances nocives pour l'air frais mené à l'habitacle du véhicule est activé pendant le fonctionnement de l'installation et l'installation est déconnectée lorsque le détecteur établit que la concentration de substances nocives augmente.

2. Procédé selon la revendication 1,
**caractérisé par**
son utilisation pour un chauffage local et/ou pour une installation de climatisation locale qu'on peut activer par signal télécommandé.

3. Dispositif pour mettre en oeuvre le procédé selon la revendication 1 ou 2,
**caractérisé en ce que**
le détecteur de substances nocives commande aussi le fonctionnement d'air frais / de circulation d'air de l'installation de chauffage et/ou de climatisation dépendante du moteur.
